# FASCICULE DE BREVET EUROPEEN

(11) **EP 1 093 430 B1**
(45) Date de publication et mention de la délivrance du brevet: **02.04.2003**
(21) Numéro de dépôt: 99929427.5
(22) Date de dépôt: 07.07.1999
(51) Int. Cl.: B62H 5/00, B62H 3/00

(54) **DISPOSITIF D'IMMOBILISATION D'UN VEHICULE NOTAMMENT A DEUX ROUES**
SCHLOSSVORRICHTUNG, INSBESONDERE FÜR ZWEIRADFAHRZEUGE
DEVICE FOR LOCKING A VEHICLE, IN PARTICULAR A TWO-WHEELER

(30) Priorité: 07.07.1998 FR 9808785
(43) Date de publication de la demande: 25.04.2001
(73) Titulaire: Tribout, Michel, 67000 Strasbourg (FR)
(72) Inventeur: Tribout, Michel, 67000 Strasbourg (FR)
(74) Mandataire: Nuss, Pierre
(86) Numéro de dépôt international: FR9901644
(87) Numéro de publication internationale: WO00001571

(56) Documents cités:
- DE-A- 4 409 164
- DE-U- 29 720 880
- NL-A- 8 700 362

## Description

La présente invention concerne la sécurité des biens, notamment à l'extérieur et dans les lieux publics, et a pour objet un dispositif antivol par immobilisation, pour un véhicule, particulièrement un véhicule à deux roues tel qu'une bicyclette.

Les dispositifs antivol connus actuellement du type chaîne, antivol souple, antivol articulé et les cadenas constitués d'un arceau rigide, agissant par engagement dans les rayons de la roue arrière en particulier, sont relativement faciles à mettre hors de service ou à éliminer à l'aide d'un outil adapté, car ils sont facilement accessibles. Ces dispositifs peuvent abîmer les roues par tension sur les rayons.

En outre, les vélos protégés par ces dispositifs antivol traditionnellement utilisés ne sont pas maintenus fixement en position verticale et se retrouvent souvent au sol, ce qui n'est souhaitable ni pour l'utilisateur, ni pour l'esthétique des emplacements réservés aux vélos en zone urbaine. Ces dispositifs, souvent lourds pour les moins vulnérables, demandent certaines manipulations pour être mis en action, puis replacés sur le vélo après utilisation.

Par ailleurs, la DE 297 208 804 décrit un dispositif antivol solidaire de la béquille d'une bicyclette, ce dispositif comportant un embout verrouillable dans un réceptacle fixé au sol.

Le problème posé à la présente invention consiste notamment à pallier ces inconvénients en proposant un dispositif antivol difficile d'accès, inviolable sans détérioration du vélo, d'un mécanisme simple et robuste, afin d'améliorer l'efficacité de la protection. Il doit être compact et non gênant en non utilisation, d'une grande facilité d'utilisation et se mettre en place d'un seul geste sans démontage/remontage. Sa mise en oeuvre doit être pratique et propre.

A cet effet, la présente invention a pour objet un dispositif d'immobilisation pour un véhicule, notamment à deux roues, sur un support ou une borne fixe, tel que par exemple un arceau ou analogue, principalement constitué d'une part, par un corps formant boîtier fixé sur ledit véhicule et comportant une partie coulissante mâle, pouvant être manoeuvré par l'utilisateur par exercice d'une poussée sur cette partie ou actionnement d'une serrure, d'autre part, par un moyen de réception femelle rapporté sur ou ménagé dans le support fixe, la partie coulissante mâle étant munie au niveau de son extrémité opposée à celle destinée à recevoir la pression exercée par l'utilisateur, d'un moyen d'accrochage formant pêne pouvant être engagé par poussée de la partie dans le moyen de réception femelle après positionnement adapté du véhicule et du boîtier et réalisant automatiquement une liaison par enclenchement entre la partie coulissante mâle et le moyen de réception femelle, déverrouillable par actionnement de la serrure.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels:
la figure 1 est une vue en élévation latérale et en coupe d'un dispositif antivol par immobilisation selon un premier mode de réalisation de l'invention ;
la figure 2 est une vue en élévation latérale et en coupe d'un support fixe muni d'un moyen de réception femelle ou réceptacle selon une variante de réalisation de l'invention ;
la figure 3 est une vue en élévation latérale et en coupe d'un ensemble boîtier/bride selon un second mode de réalisation préféré de l'invention, et,
la figure 4 est une vue de dessus de l'ensemble représenté sur la figure 3 partiellement selon une variante de réalisation.

Comme le montrent les figures des dessins annexés, le dispositif d'immobilisation est principalement constitué, d'une part, par un corps formant boîtier 1 fixé rigidement sur ledit véhicule 2 et comportant une partie coulissante mâle 3, pouvant être manoeuvré par l'utilisateur par exercice d'une poussée sur cette partie 3 ou actionnement d'une serrure 4, d'autre part, par un moyen de réception femelle 5 rapporté sur ou ménagé dans le support fixe 6, la partie coulissante mâle 3 étant munie au niveau de son extrémité 3" opposée à celle 3' destinée à recevoir la pression exercée par l'utilisateur, d'un moyen d'accrochage 7 formant pêne pouvant être engagé par poussée de la partie 3 dans le moyen de réception femelle 5 après positionnement adapté du véhicule 2 et du boîtier 1 et réalisant automatiquement une liaison par enclenchement entre la partie coulissante mâle 3 et le moyen de réception femelle 5, déverrouillable par actionnement de la serrure 4.

La partie coulissante 3 sensiblement en forme de broche ou de cheville s'engage dans le moyen de réception femelle 5 avec une conjugaison de formes au moins partielle de manière à obtenir une liaison totalement rigide en translation.

Après alignement de la partie coulissante mâle 3 et du moyen de réception femelle 5 et emboîtement sur une profondeur suffisante de celui-ci dans cette dernière, le moyen d'accrochage 7 vient en prise, en se déployant directement sous l'action d'une poussée de l'utilisateur ou automatiquement sous l'action d'une force élastique, au niveau d'un décrochement interne 5' du moyen de réception femelle 5, ce dernier présentant, le cas échéant, une structure à symétrie axiale ou planaire et le contact entre le moyen 7 et le décrochement 5' peut être de nature surfacique, linéaire ou ponctuel en fonction de la réalisation dudit moyen 7.

De manière avantageuse, l'actionnement de la serrure 4 entraîne le déblocage du moyen d'accrochage 7 et son passage d'une position déployée vers une position rétractée au moins partiellement dans le boîtier 1, autorisant l'extraction de la partie coulissante mâle 3 du moyen de réception femelle 5, cette extraction correspondant à une rétraction de l'extrémité 3" de connection de ladite partie coulissante mâle 3 dans le boîtier 1, préférentiellement sous l'action d'un moyen élastique 8 précontraint lors de son engagement sous pression par l'utilisateur dans ledit moyen de réception femelle 5, la désolidarisation véhicule 2/support 6 s'effectuant ainsi sans autre manoeuvre pour l'utilisateur.

Pour obtenir une structure compacte du dispositif antivol, assurant une surface exposée externe minimale et une liaison rapprochée entre le véhicule 2 et le support 6, le boîtier 1, préférentiellement sous forme de carter à structure monobloc (pièce moulée métallique ou en plastique résistant), est solidarisé de manière immédiatement contiguë, à un élément tubulaire 2', préférentiellement du cadre du véhicule 2 à deux roues, au moyen d'une bride annulaire 9, éventuellement avec interposition d'une bague 9' d'adaptation ou de réduction, par exemple en une matière au moins partiellement compressible et moins dure que celle de l'élément tubulaire 2'.

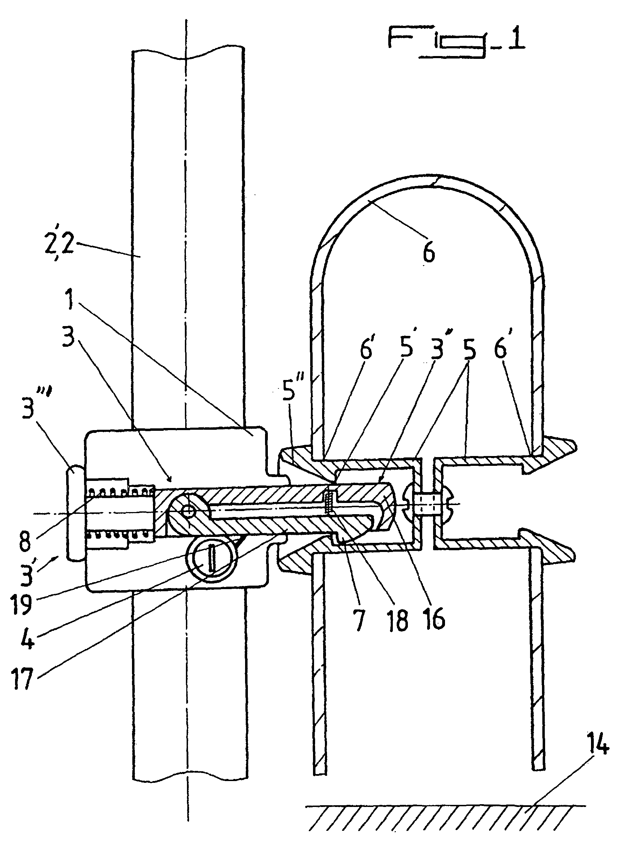

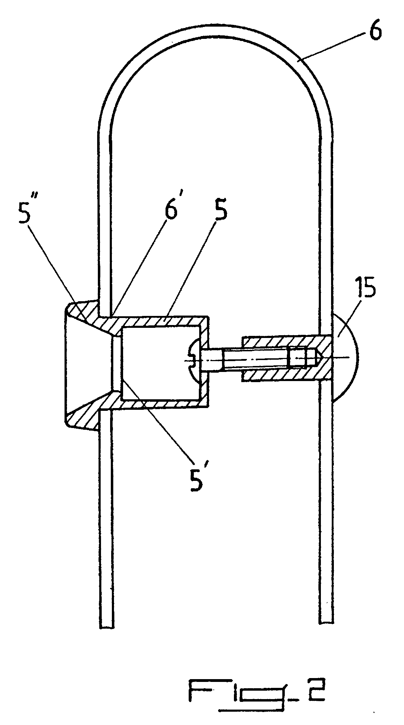

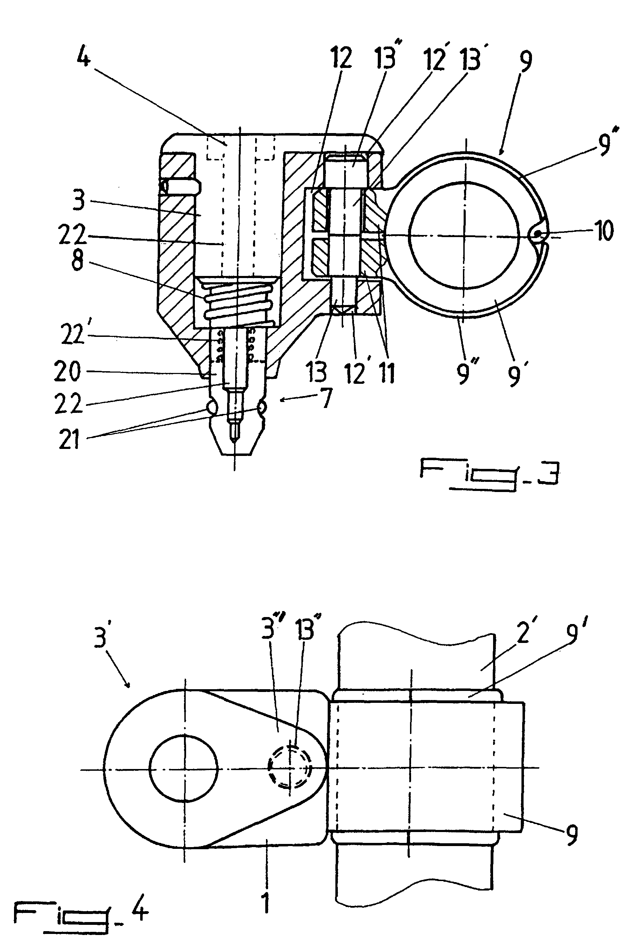

Selon une variante de réalisation préférée de l'invention et comme le montrent plus particulièrement les figures 3 et 4 des dessins annexés, la bride annulaire 9 formant collier de fixation peut consister en deux demi-coques 9" articulées entre elles au moyen d'une charnière 10, préférentiellement non proéminente, et pourvues, à leurs extrémités opposées aux extrémités reliées par ladite charnière 10, d'oeillets 11, dont l'un est préférentiellement fileté et l'autre non, alignés entre eux à l'état fermé de ladite bride annulaire 9 et reçus, préférentiellement avec au moins un léger jeu en rotation, dans un logement 12 de forme correspondante du boîtier 1, prolongé par des passages 12' alignés pour l'introduction et le blocage d'un élément d'assemblage 13, préférentiellement sous forme d'une vis avec un filetage 13' limité, correspondant à celui de l'oeillet 11 fileté, verrouillant la bride annulaire 9 à l'état fermé et la solidarisant au boîtier 1.

Une telle réalisation de la bride 9 permet, tout en fournissant une liaison très résistante entre le véhicule 2 et le corps ou carter 1, de garantir un léger déplacement par articulation et pivotement limité(e) de ladite bride par rapport au boîtier permettant un ajustement et un alignement dans une plage limitée entre la partie 3 et le réceptacle 5, pour éventuellement rattraper les tolérances au niveau de l'emplacement desdits réceptacles ou moyens de réception femelle 5.

Ledit déplacement découlera notamment du jeu entre la partie non filetée de l'élément d'assemblage 13 et l'oeillet 11 qu'il traverse et de la rotation limitée possible entre le boîtier 1 et ladite bride 9 autour de l'élément 13. Pour des mouvements intempestifs du boîtier 1 par rapport à la bride 9 lorsque le dispositif est hors service (par exemple lorsque le véhicule se déplace), il peut être prévu une lame ressort (non représentée) maintenant élastiquement ledit boîtier 1 dans une position déformée ou non déformée extrême par rapport à l'élément tubulaire 2.

Pour éviter toute désolidarisation non autorisée du boîtier 1, l'extrémité 3' de la partie coulissante 3 sur laquelle s'applique la pression exercée par l'utilisateur en vue de son déplacement, comporte une tête élargie ou une partie proéminente radiale 3"' recouvrant, au moins partiellement, l'une des extrémités de l'élément d'assemblage 13, par exemple la tête de manoeuvre 13" de l'élément d'assemblage 13 en forme de vis.

On pourra, dans ce cas, également prévoir un moyen pour empêcher toute rotation de la partie coulissante 3 autour de son axe longitudinal.

Conformément à une caractéristique de l'invention, représentée aux figures 1 et 2 des dessins annexés, le moyen de réception femelle 5 présente sensiblement une forme de dé à coudre, formé dans ou rapporté dans un logement 6' du support fixe 6, préférentiellement à extension verticale ou au moins inclinée par rapport au sol 14, et comportant successivement un épaulement circulaire 5', puis une portion de paroi 5" évasée tronconiquement en direction de son ouverture externe, favorisant le centrage de la partie 3 lors de son introduction dans le moyen 5.

Préférentiellement, chaque moyen de réception femelle 5 est rapporté dans un support tubulaire 6 creux, tel que par exemple un arceau, en étant solidarisé mécaniquement avec un élément d'ancrage 15 ou un second moyen de réception femelle 5 fixé sur une portion de paroi opposée dudit support 6, chaque support 6 pouvant porter plusieurs moyens de réception 5 situées à des hauteurs déterminées différentes par rapport au sol 14, de manière à pouvoir recevoir des parties coulissantes 3 de boîtiers 1 montés sur des deux roues 2 de tailles différentes ou des emplacements variés sur ces derniers.

On tendra toutefois à standardiser les hauteurs de fixation des boîtiers 1 pour limiter le nombre de moyens de réception femelles 5 à installer dans les différents lieux susceptibles de servir d'emplacements de dépôt de véhicules 2.

On notera que les moyens de réception femelles 5, ainsi que les éléments d'ancrage 15, tels que par exemple des vis, prennent appui par une surface de contact annulaire sur les parois du support 6 et conservent l'étanchéité de ce dernier lorsqu'il est creux.

Selon un premier mode de réalisation de l'invention, représenté à la figure 1 des dessins annexés, la partie coulissante 3 comprend un corps de pêne 16 et une clenche articulée autour d'un axe par rapport à ce dernier, se bloquant sur le décrochement en forme de mentonnet 5" du moyen de réception ou réceptacle 5. Un ressort 18 prenant appui sur ledit corps de pêne 16, agit de façon à maintenir la clenche 17 en appui sur le mentonnet 5" après enclenchement.

En outre, la serrure 4 montée dans le boîtier 1 peut comprendre un canon tournant pouvant être manoeuvré à l'aide d'une clé pour faire pivoter un doigt radial 19 solidaire du canon, de façon à débloquer la clenche 17 de sa prise avec le mentonnet 5". Un ressort de retour 8 prenant appui sur le boîtier 1 et le corps de pêne 17 de la partie coulissante 3 sollicite cette dernière vers une position de repos et de non utilisation rétractée dans le boîtier 1.

On décrira à présent plus précisément la mise en oeuvre de l'invention, en relation avec le premier mode de réalisation précité.

Comme le montre la figure 1 précitée, le boîtier 1 comporte une partie coulissante 3 facilement actionnable avec un seul doigt, par exemple sous la pression du pouce. Il suffit d'amener le vélo 2 ou analogue contre l'arceau 6 fixé au sol 14 et d'aligner les deux parties complémentaires boîtier 1 et réceptacle 5 du dispositif. Le boîtier 1 placé au niveau du réceptacle 5 permet à la partie coulissante 3 actionnée par l'utilisateur par l'exercice d'une pression, de pénétrer dans ledit réceptacle 5 et de s'y bloquer en s'enclenchant et les deux parties sont ainsi fixées rigidement entre elles, rendant de ce fait le vélo 2 solidaire de l'arceau 6.

Pour désolidariser le vélo 2 de l'arceau 6 dans le mode de réalisation décrit ci-dessus et illustré par la figure 1 annexée, on introduit la clef dans le canon de la serrure 4, on fait tourner la clef afin de libérer la clenche 17 de sa prise avec le mentonnet 5'. Le ressort de retour 8 actionne la partie coulissante 3, recentrant celle-ci par rétraction dans le boîtier 1. La serrure 4 peut éventuellement utiliser d'autres techniques d'accès (identification tactile, visuelle ou vocale, télécommande, carte, etc).

Le dispositif 1 est solidaire du tube transversal 2' du cadre d'un vélo 2 par exemple, de telle manière qu'il soit impossible de le démonter. A titre d'exemple, cette fixation peut être assurée par un collier 9 en acier trempé pour éviter tout perçage et par une vis pointeau interdisant tout glissement dudit dispositif le long du tube.

Lors de la mise en place, ces vis pourront être sectionnées à la meule. La fixation peut également être assurée par soudure.

La bride ou collier de fixation 9 peut, pour des facilités d'installation du système, comporter un serrage protégé par la mise en place du boîtier 1. Le démontage est ainsi impossible lorsque le dispositif antivol est en action. Le collier de fixation 5 peut être adapté aux différents diamètres de tubes de cadre, sans oublier les tubes ovaloïdes ou rectangulaires.

Afin de pouvoir aligner aisément les deux parties 1 et 5 indépendantes et complémentaires du dispositif, il convient de définir, par exemple, deux hauteurs de fixation sur le tube diagonal 2' du cadre du vélo 2 par rapport au niveau du sol 14 afin de permettre l'installation sur la plupart des vélos. Il suffit alors que les réceptacles 5 placés dans les arceaux 6 reprennent ces deux hauteurs pour permettre à chaque cycliste de bloquer en position aisément son boîtier 1 dans le réceptacle 5 correspondant à la hauteur de fixation retenue pour son vélo.

Ce réceptacle 5 est placé par exemple dans le tube de l'arceau 6 et fixé de l'intérieur afin de rendre impossible le démontage lorsque le système est enclenché. La fixation peut être également assurée par des clips.

Selon un second mode de réalisation de l'invention, représenté aux figures 3 et 4 des dessins annexés, la partie coulissante mâle 3 comprend un corps de pêne 20 pouvant être déplacé par poussée et renfermant, au niveau de son extrémité 3" destinée à être engagée dans le moyen de réception femelle 5, au moins deux billes 21 logées dans des canaux débouchant latéralement, lesdites billes 21 pouvant être déplacées entre une position proéminente par rapport à la paroi latérale de la partie coulissante mâle 3 et une position où elles sont au moins de niveau avec cette dernière, sous l'action d'une tige de manoeuvre 22 disposée et déplaçable coaxialement par rapport à ladite partie coulissante 3 et verrouillable en position engagée d'extension des billes 21 vers l'extérieur au moyen d'une serrure 4 à enclenchement automatique et à déblocage manuel.

Le verrouillage de la solidarisation boîtier 1/moyen 5 s'effectue par blocage de la tige de manoeuvre ou du stylet 22 dans sa position engagée ou enfoncée (de telle manière que les billes 21 viennent en prise derrière le décrochement 5'), son retrait ou son déplacement de désengagement s'effectuant automatiquement sous l'action d'un ressort 22' à compression, après déverrouillage au niveau de la serrure 4.

Le boîtier 1 pourra également comporter, selon une caractéristique supplémentaire de l'invention non représentée sur les dessins annexés, un câble souple (par exemple un câble multibrins acier sous gaine plastique) fixé à l'une de ses extrémités sur l'élément d'assemblage 13 et portant à son autre extrémité un moyen de réception femelle 5, permettant ainsi de réaliser une boucle formant cadenas souple pour par exemple bloquer une roue du véhicule ou immobiliser un véhicule supplémentaire.

Il ressort de ce qui précède que les avantages du dispositif selon l'invention sont nombreux : il est simple, robuste, fixé sur le deux roues, on ne l'oublie pas, on ne le vole pas, il ne pose aucun problème de transport ou d'encombrement dans son état hors service. Il améliore la sécurité, car il est très difficile à fracturer avec des outils conventionnels, il rend également problématique le vol de roue puisque le vélo est maintenu fixement et ne peut donc être penché ou soulevé.

Un autre avantage est certainement sa facilité et sa propreté d'utilisation puisqu'il s'actionne d'un seul geste et se libère de même.

Pour les villes ou autres collectivités locales, ce dispositif présente de nombreux avantages. En incitant les cyclistes à parquer leur vélo 2 aux emplacements réservés pourvus de réceptacles 5, il évite de voir les vélos tombés et sa partie fixe 5 se monte discrètement dans les arceaux et donc utilise les structures existantes.

En luttant plus efficacement contre le vol, handicap majeur pour la pratique urbaine régulière du vélo, il facilite et donc développe l'utilisation du vélo comme mode de transport en zone urbaine.

L'invention est applicable à différents types de véhicules 2, notamment à deux roues (vélos, cyclomoteurs, scooters, motos, ...), ainsi que pour les porte-vélos.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention, tel que défini dans les revendications jointes.

## Revendications

1. Dispositif d'immobilisation pour un véhicule, notamment à deux roues, sur un support ou une borne fixe, tel que par exemple un arceau ou analogue, **caractérisé en ce qu'**il est constitué principalement, d'une part, par un corps formant boîtier (1) fixé sur ledit véhicule (2) et comportant une partie coulissante mâle (3), pouvant être manoeuvré par l'utilisateur par exercice d'une poussée sur cette partie coulissante mâle (3) ou actionnement d'une serrure (4), d'autre part, par un moyen de réception femelle (5) rapporté sur ou ménagé dans le support fixe (6), la partie coulissante mâle (3) étant munie au niveau de son extrémité (3") opposée à celle (3') destinée à recevoir la pression exercée par l'utilisateur, d'un moyen d'accrochage (7), **caractérisé en ce que** le dit moyen d'accrochage (7) forme un pêne pouvant être engagé par poussée de la partie coulissante mâle (3) dans le moyen de réception femelle (5) après positionnement adapté du véhicule (2) et du boîtier (1) et réalisant automatiquement une liaison par enclenchement entre la partie coulissante mâle (3) et le moyen de réception femelle (5), déverrouillable par actionnement de la serrure (4).

2. Dispositif selon la revendication 1, **caractérisé en ce que** le moyen d'accrochage (7) vient en prise, en se déployant directement sous l'action d'une poussée de l'utilisateur ou automatiquement sous l'action d'une force élastique, au niveau d'un décrochement interne (5') du moyen de réception femelle (5), ce dernier présentant, le cas échéant, une structure à symétrie axiale ou planaire.

3. Dispositif selon la revendication 2, **caractérisé en ce que** l'actionnement de la serrure (4) entraîne le déblocage du moyen d'accrochage (7) et son passage d'une position déployée vers une position rétractée, autorisant l'extraction de la partie coulissante mâle (3) du moyen de réception femelle (5), cette extraction correspondant à une rétraction de l'extrémité (3") de connection de ladite partie coulissante mâle (3) dans le boîtier (1), préférentiellement sous l'action d'un moyen élastique ;(8) précontraint lors de son engagement sous pression par l'utilisateur dans ledit moyen de réception femelle (5).

4. Dispositif selon l'une quelconque des revendications 1 à 3, **caractérisé en ce que** le boîtier (1), préférentiellement à structure monobloc, est solidarisé, de manière immédiatement contiguë, à un élément tubulaire (2'), préférentiellement du cadre du véhicule (2) à deux roues, au moyen d'une bride annulaire (9), éventuellement avec interposition d'une bague (9') d'adaptation ou de réduction, par exemple en une matière au moins partiellement compressible et moins dure que celle de l'élément tubulaire (2').

5. Dispositif selon la revendication 4, **caractérisé en ce que** la bride annulaire (9) consiste en deux demi-coques (9") articulées entre elles au moyen d'une charnière (10), préférentiellement non proéminente, et pourvues, à leurs extrémités opposées aux extrémités reliées par ladite charnière (10), d'oeillets (11), dont l'un est préférentiellement fileté et l'autre non, alignés entre eux à l'état fermé de ladite bride annulaire (9) et reçus, préférentiellement avec au moins un léger jeu en rotation, dans un logement (12) de forme correspondante du boîtier (1), prolongé par des passages (12') alignés pour l'introduction et le blocage d'un élément d'assemblage (13), préférentiellement sous forme d'une vis avec un filetage (13') limité, correspondant à celui de l'oeillet (11) fileté, verrouillant la bride annulaire (9) à l'état fermé et la solidarisant au boîtier (1).

6. Dispositif selon la revendication 5, **caractérisé en ce que** l'extrémité (3') de la partie coulissante mâle (3) sur laquelle s'applique la pression exercée par l'utilisateur en vue de son déplacement, comporte une tête élargie ou une partie proéminente radiale (3"') recouvrant, au moins partiellement, l'une des extrémités de l'élément d'assemblage (13), par exemple la tête de manoeuvre (13") de l'élément d'assemblage (13) en forme de vis.

7. Dispositif selon l'une quelconque des revendications 1 à 6, **caractérisé en ce que** le moyen de réception femelle (5) présente sensiblement une forme de dé à coudre, formé dans ou rapporté dans un logement (6') du support fixe (6), préférentiellement à extension verticale ou au moins inclinée par rapport au sol (14), et comportant successivement un épaulement circulaire (5'), puis une portion de paroi (5") évasée tronconiquement en direction de son ouverture externe.

8. Dispositif selon la revendication 7, **caractérisé en ce que** chaque moyen de réception femelle (5) est rapporté dans un support tubulaire (6) creux, tel que par exemple un arceau, en étant solidarisé mécaniquement avec un élément d'ancrage (15) ou un second moyen de réception femelle (5) fixé sur une portion de paroi opposée dudit support (6), chaque support (6) pouvant porter plusieurs moyens de réception (5) situées à des hauteurs déterminées différentes par rapport au sol (14).

9. Dispositif selon l'une quelconque des revendications 2 à 8, **caractérisé en ce que** la partie coulissante mâle (3) comprend un corps de pêne (16) et une clenche articulée autour d'un axe par rapport à ce dernier, se bloquant sur le décrochement en forme de mentonnet (5") du moyen de réception ou réceptacle (5) et **en ce qu'**un ressort (18) prenant appui sur ledit corps de pêne (16), agit de façon à maintenir la clenche (17) en appui sur le mentonnet (5") après enclenchement.

10. Dispositif selon la revendication 9, **caractérisé en ce que** la serrure (4) montée dans le boîtier (1) comprend un canon tournant pouvant être manoeuvré à l'aide d'une clé pour faire pivoter un doigt radial (19) solidaire du canon, de façon à débloquer la clenche (17) de sa prise avec le mentonnet (5") et **en ce qu'**un ressort de retour (8) prenant appui sur le boîtier (1) et le corps de pêne (17) de la partie coulissante mâle (3) sollicite cette dernière vers une position de repos et de non utilisation rétractée dans le boîtier (1).

11. Dispositif selon l'une quelconque des revendications 2 à 8, **caractérisé en ce que** la partie coulissante mâle (3) comprend un corps de pêne (20) pouvant être déplacé par poussée et renfermant, au niveau de son extrémité (3") destinée à être engagée dans le moyen de réception femelle (5), au moins deux billes (21) logées dans des canaux débouchant latéralement, lesdites billes (21) pouvant être déplacées entre une position proéminente par rapport à la paroi latérale de la partie coulissante mâle (3) et une position où elles sont au moins de niveau avec cette dernière, sous l'action d'une tige de manoeuvre (22) disposée et déplaçable coaxialement par rapport à ladite partie coulissante mâle (3) et verrouillable en position engagée d'extension des billes (21) vers l'extérieur au moyen d'une serrure (4) à enclenchement automatique et à déblocage manuel.

## Claims

1. Locking device for a vehicle, in particular a two-wheeler, on a support or a fixed post, such as, for example, a U-bolt or similar, **characterised in that** it mainly consists, on the one hand, of a body forming a housing (1) fixed on said vehicle (2) and comprising a male sliding part (3), capable of being operated by the user by pressing on this male sliding part (3), or actuating a lock (4) and, on the other hand, of a female receiving means (5) mounted or arranged in the fixed support (6), the male sliding part (3) being provided in the region of its end (3') opposite the end (3') intended to receive the pressure exerted by the user with a catching means (7), **characterised in that** said catching means (7) forms a lock pin, capable of being engaged by pushing the male sliding part (3) into the female receiving means (5) after adapted positioning of the vehicle (2) and the housing (1) and automatically coupling by interlocking the male sliding part (3) and the female receiving means (5), capable of being unlocked by actuating the lock (4).

2. Device according to claim 1, **characterised in that** the catching means (7) catches, by opening out directly owing to a pushing action of the user or automatically owing to the action of an elastic force, in the region of an internal recess (5') of the female receiving means (5) which, if necessary, has a structure with axial or planar symmetry.

3. Device according to claim 2, **characterised in that** actuating the lock (4) brings about the release of the catching means (7) and its passage from an opened out position towards a retracted position, allowing the extraction of the male sliding part (3) from the female receiving means (5), this extraction corresponding to a retraction of the connecting end (3") of said male sliding part (3) in the housing (1), preferably owing to the action of an elastic means (8) biased at the time of its engagement owing to pressure by the user in said female receiving means (5).

4. Device according to any one of claims 1 to 3, **characterised in that** the housing (1), preferably with an integral structure, is connected in an immediately adjoining manner, to a tubular element (2'), preferably of the two-wheeler vehicle frame (2), by means of an annular collar (9), optionally with interposition of an adapting ring or bushing (9'), for example made from a material which is at least partially compressible and less hard than that of the tubular element (2').

5. Device according to claim 4, **characterised in that** the annular collar (9) consists of two half shells (9") joined together by means of a hinge (10), preferably not protruding, and provided at their ends opposite the ends connected by said hinge (10), with eyelets (11), one of which is preferably threaded and the other not, aligned with one another in the closed state of said annular collar (9) and received, preferably with at least a slight rotary play, in a receiver (12) with a shape corresponding to the housing (1), extended by passages (12') which are aligned for the introduction and locking of an assembly element (13), preferably in the form of a screw with limited threading (13'), corresponding to that of the threaded eyelet (11), screwing the annular collar (9) in the closed state and connecting it to the housing (1).

6. Device according to claim 5, **characterised in that** the end (3') of the male sliding part (3) on which the pressure exerted by the user for the displacement thereof is applied, comprises a widened head or a radial protruding part (3"') covering, at least partly, one of the ends of the assembly element (13), for example the control head (13") for the assembly element (13) in screw form.

7. Device according to any one of claims 1 to 6, **characterised in that** the female receiving means (5) substantially has the shape of a thimble, formed in or connected in a receiver (6') of the fixed support (6), preferably with a vertical extension or at least tilted with respect to the ground (14), and comprising successively a circular shoulder (5'), then a wall portion (5") widened in a truncated manner in the direction of its external aperture

8. Device according to claim 7, **characterised in that** each female receiving means (5) is connected in a hollow tubular support (6), such as, for example, a U-bolt, being mechanically connected to an anchoring element (15) or a second female receiving means (5) fixed to a wall portion opposite said support (6), each support (6) being capable of carrying a plurality of receiving means (5) situated at different defined levels with respect to the ground (14).

9. Device according to any one of claims 2 to 8, **characterised in that** the male sliding part (3) comprises a lock pin body (16) and a latch joined around an axis with respect to the latter, locking on the recess in the form of a catch (5") of the receiving means or receptacle (5) and **in that** a spring (18) resting on said lock pin body (16) acts in such a way as to keep the latch (17) resting on the catch (5") after latching.

10. Device according to claim 9, **characterised in that** the lock (4) mounted in the housing (1) comprises a rotary barrel which can be operated by a key to pivot a radial finger (19) which is integral with the barrel, so as to unlock the latch (17) from its hold in the catch (5") and **in that** a return spring (8) resting on the housing (1) and the lock pin body (17) of the male sliding part (3) pulls this latter toward a position of rest and retracted non-use in the housing (1).

11. Device according to any one of claims 2 to 8, **characterised in that** the male sliding part (3) comprises a lock pin body (20) capable of being displaced by pushing and including, in the region of its end (3") for engagement in a female receiving means (5), at least two balls (21) housed in channels opening laterally, said balls (21) being displaceable between a protruding position with respect to the lateral wall of the male sliding part (3) and a position where they are at least level with the male sliding part (3), owing to the action of a control rod (22) which is disposed and coaxially displaceable with respect to said male sliding part (3) and capable of being screwed in the engaged position for extending the balls (21) toward the exterior by means of a lock (4) with automatic latching and manual unlocking.

## Patentansprüche

1. Vorrichtung zum Absperren eines Fahrzeugs, insbesondere eines Zweiradfahrzeugs, auf einem Träger oder einer stationären Säule, wie zum Beispiel einem Bogen oder ähnlichem, **dadurch gekennzeichnet, dass** sie in der Hauptsache einerseits aus einem Körper besteht, der ein Gehäuse (1) bildet, das auf dem Fahrzeug (2) installiert und mit einem Gleitsteckerteil (3) versehen ist, der vom Benutzer durch Ausüben eines Schubs auf diesen Gleitsteckerteil (3) oder durch Betätigen eines Schlosses (4) manipuliert werden kann, andererseits aus einem Buchsenaufnahmemittel (5), das auf dem stationären Träger (6) angebaut oder in diesem eingerichtet ist, wobei der Gleitsteckerteil (3) an seinem Ende (3") gegenüber dem Ende (3'), das dazu bestimmt ist, den vom Benutzer ausgeübten Schub aufzunehmen, mit einem Aufhängmittel (7) versehen ist, **dadurch gekennzeichnet, dass** das Aufhängmittel (7) einen Riegel bildet, der durch Schieben des beweglichen Gleitsteckerteils (3) in das Buchsenaufnahmemittel (5) nach entsprechendem Positionieren des Fahrzeugs (2) und des Gehäuses (1) eingeführt werden kann und automatisch eine Verbindung durch Einrasten zwischen dem Gleitsteckerteil (3) und dem Buchsenaufnahmemittel (5) herstellt, entriegelbar durch Betätigen des Schlosses (4).

2. Vorrichtung nach Anspruch 1, **dadurch gekennzeichnet, dass** das Aufhängmittel (7) eingreift, indem es direkt unter der Einwirkung des Schubs durch den Benutzer oder automatisch unter der Einwirkung einer elastischen Kraft auf der Ebene eines internen Absatzes (5') des Buchsenaufnahmemittels (5) ausfährt, wobei letztes gegebenenfalls eine Struktur mit axialer oder ebener Struktur aufweist.

3. Vorrichtung nach Anspruch 2, **dadurch gekennzeichnet, dass** das Betätigen des Schlosses (4) das Freigeben des Aufhängmittels (7) nach sich zieht und seinen Übergang von einer ausgefahrenen Position zu einer eingezogenen Position, wodurch das Herausziehen des Gleitsteckerteils (3) aus dem Buchsenaufnahmemittel (5) erlaubt wird, wobei das Herausziehen einem Zurückziehen des Anschlussendes (3") des Gleitsteckerteils (3) im Gehäuse (1) entspricht, vorzugsweise unter der Einwirkung eines vorgespannten elastischen Mittels (8) bei dessen Einführen unter Druck durch den Benutzer in das Buchsenaufnahmemittel (5).

4. Vorrichtung nach einem der Ansprüche 1 bis 3, **dadurch gekennzeichnet, dass** das Gehäuse (1), das vorzugsweise Monoblockstruktur hat, gleich daneben fest mit einem röhrenförmigen Element (2'), vorzugsweise mit dem Rahmen des Zweiradfahrzeugs (2) durch einen Ringflansch (9) verbunden ist, eventuell mit Einfügen eines Rings (9') zum Anpassen oder Reduzieren, zum Beispiel aus einem mindestens teilweise komprimierbaren Werkstoff, der nicht so hart ist wie das röhrenförmige Element (2').

5. Vorrichtung nach Anspruch 4, **dadurch gekennzeichnet, dass** der Ringflansch (9) aus zwei Halbschalen (9") besteht, die unter einander gelenkig durch ein Scharnier (10) verbunden sind, das vorzugsweise nicht vorsteht, und die an ihren Enden, die den Enden gegenüberliegen, die durch das Scharnier (10) verbunden sind, mit Ösen (11) ausgestattet sind, von welchen eine vorzugsweise ein Gewinde hat, die andere nicht, die unter einander im geschlossenen Zustand des Ringflanschs (9) ausgerichtet sind und vorzugsweise mit mindestens einem leichten Drehspiel in einer Aussparung (12), deren Form des Gehäuses (1) entspricht, aufgenommen werden, verlängert durch Passagen (12'), die durch Einführen und Blockieren eines Zusammenfügeelements (13) gefluchtet werden und vorzugsweise aus einer Schraube mit einem begrenzten Gewinde (13') bestehen, das dem der Gewindeöse (11) entspricht und den Ringflansch (9) im geschlossenen Zustand verriegeln und fest mit dem Gehäuse (1) verbinden.

6. Vorrichtung nach Anspruch 5, **dadurch gekennzeichnet, dass** das Ende (3') des Gleitsteckerteils (3), auf den der vom Benutzer ausgeübte Druck zu dessen Verschieben einwirkt, einen verbreiterten Kopf oder einen radialen hervorstehenden Teil (3"') umfasst, der mindestens teilweise eines der Enden des Zusammenfügeelements (13) überdeckt, zum Beispiel den Handhabungskopf (13") des Zusammenfügeelements (13) in Schraubenform.

7. Vorrichtung nach einem der Ansprüche 1 bis 6, **dadurch gekennzeichnet, dass** das Buchsenaufnahmemittel (5) in etwa die Form eines Fingerhuts hat, der in einer Aussparung (6') des stationären Trägers (6) gebildet oder angebaut ist, vorzugsweise mit senkrechter Ausdehnung oder zumindest in Bezug auf den Boden (14) geneigt, und das nacheinander einen Kreisansatz (5'), dann einen Wandteil (5") mit kegelstumpfförmiger Aufweitung in Richtung seiner externen Öffnung umfasst.

8. Vorrichtung nach Anspruch 7, **dadurch gekennzeichnet, dass** jedes Buchsenaufnahmemittel (5) in einem röhrenförmigen hohlen Träger (6) angebaut ist, wie zum Beispiel einem Bogen und mechanisch fest mit einem Verankerungselement (15) oder einem zweiten Buchsenaufnahmemittel (5) verbunden ist, das auf einem Teil der Wand gegenüber des Trägers (6) befestigt ist, wobei jeder Träger (6) mehrere Buchsenaufnahmemittel (5) in bestimmten unterschiedlichen Höhen in Bezug auf den Boden (14) tragen kann.

9. Vorrichtung nach einem der Ansprüche 2 bis 8, **dadurch gekennzeichnet, dass** der Gleitsteckerteil (3) einen Riegelkörper (16) und eine Falle umfasst, die um eine Achse in Bezug auf letzteren gelenkig installiert ist, die sich auf dem Absatz in Klinkhakenform (5") des Buchsenaufhahmemittels (5) blockiert, und dadurch, dass eine Feder (18), die auf dem Riegelkörper (16) aufliegt, so wirkt, dass die Falle (17) nach dem Einrasten in Auflage auf dem Klinkhaken (5") gehalten wird.

10. Vorrichtung nach Anspruch 9, **dadurch gekennzeichnet, dass** das Schloss (4), das in das Gehäuse (1) gebaut ist, ein drehendes Schlüsselrohr umfasst, das mit einem Schlüssel manipuliert werden kann, so dass ein radialer Finger (19), der fest mit dem Schlüsselrohr verbunden ist, geschwenkt werden kann, so dass die Falle (17) aus ihrem Eingriff mit dem Klinkhaken (5") freigegeben wird und der Riegelkörper (17) des Gleitsteckerteils (3) letztere zu einer Ruhe- ohne Nichtbenutzungsposition in das Gehäuse eingezogen betätigt.

11. Vorrichtung nach einem der Ansprüche 2 bis 8, **dadurch gekennzeichnet, dass** der Gleitsteckerteil (3) einen Riegelkörper (20) umfasst, der durch Schieben verstellt werden kann und auf der Ebene seines Endes (3") zum Einführen in das Buchsenaufhahmemittel (5) mindestens zwei Kugeln (21) umfasst, die in einem der seitlich mündenden Kanäle untergebracht sind, wobei die Kugeln (21) zwischen einer vorstehenden Position in Bezug auf die Seitenwand des Gleitsteckerteils (3) und einer Position, in der sie mindestens mit letzterem gefluchtet sind, unter der Einwirkung eines Betätigungsschafts (22) verstellt werden können, der koaxial und in Bezug auf den Gleitsteckerteil (3) verstellbar angeordnet und in eingeführter Erweiterungsposition der Kugeln (21) nach außen mit einem Schloss (4) mit automatischem Einrasten und manuellem Freigeben verriegelbar ist.
